(19) Europäisches Patentamt
European Patent Office
Office européen des brevets

(11) EP 1 266 375 B1

(12) EUROPÄISCHE PATENTSCHRIFT

(45) Veröffentlichungstag und Bekanntmachung des Hinweises auf die Patenterteilung:
**21.09.2005 Patentblatt 2005/38**

(21) Anmeldenummer: **01911599.7**

(22) Anmeldetag: **06.02.2001**

(51) Int Cl.[7]: **G11B 7/0045**, G11B 7/24

(86) Internationale Anmeldenummer:
**PCT/EP2001/001236**

(87) Internationale Veröffentlichungsnummer:
**WO 2001/061690 (23.08.2001 Gazette 2001/34)**

(54) **OPTISCHES SPEICHERVERFAHREN FÜR WIEDERBESCHREIBBARE DIGITALE DATENTRÄGER**

OPTICAL STORAGE METHOD FOR REWRITABLE DIGITAL DATA CARRIERS

PROCEDE DE STOCKAGE OPTIQUE POUR SUPPORTS DE DONNEES NUMERIQUES REINSCRIPTIBLES

(84) Benannte Vertragsstaaten:
**AT BE CH CY DE DK ES FI FR GB GR IE IT LI LU MC NL PT SE TR**

(30) Priorität: **18.02.2000 DE 10007410**

(43) Veröffentlichungstag der Anmeldung:
**18.12.2002 Patentblatt 2002/51**

(73) Patentinhaber: **Bayer MaterialScience AG
51368 Leverkusen (DE)**

(72) Erfinder:
- **HAGEN, Rainer
51373 Leverkusen (DE)**
- **BIERINGER, Thomas
51519 Odenthal (DE)**
- **KOSTROMINE, Serguei
53913 Swisttal (DE)**
- **BERNETH, Horst
51373 Leverkusen (DE)**

(56) Entgegenhaltungen:
**EP-A- 0 856 527**
**WO-A-97/44365**
**DE-A- 3 810 722**
**US-A- 5 173 381**

EP 1 266 375 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren, nach dem digitale Informationen in einem flächig ausgedehnten Medium mehrfach lichtinduziert gespeichert und wieder gelöscht werden können, wobei die Informationen optisch lesbar sind.

Die Technik des optischen Speichems und Auslesens digitaler Daten wird bereits intensiv kommerziell genutzt. Die CD-R und die DVD-R im Audio- oder im Video-format sind Wechselmedien, die die Möglichkeit der einmaligen optischen Datenspeicherung bieten. Sie sind dabei, die marktbeherrschenden Datenträger Audio-CD und CD-ROM zu verdrängen, bei denen die Daten beim Spritzgussprozess des Trägermaterials in Form von lokalen Vertiefungen, den sog. Pits, abgelegt werden (EP-A 25253). CD-R und DVD-R besitzen einen Mehrschichtaufbau aus einem i.a. aus Polycarbonat bestehenden Trägermaterial, einer dünnen Farbstoffschicht und einer i.a. aus Gold bestehenden Reflexionsschicht, die von einem Decklack geschützt wird. Das Speicherverfahren beruht auf lichtinduzierten Effekten, die durch die Fokussierung eines Lasers durch das Substrat hindurch auf die Funktionsschicht auftreten, die das Laserlicht absorbiert. Der Laser wird in den Trackingspuren (sog. Pregrooves) geführt, die in das Trägermaterial eingeprägt sind und deren Form von der Farbstoffschicht nachgebildet wird. Als Folge eines hinreichend intensiven Laserpulses kann sich das Absorptionsverhalten der Farbstoffschicht z.B. durch Zersetzung von Molekülen verändern. Weiterhin kann sich die Farbstoffschicht lokal am Ort des Laserfokus so stark erhitzen, dass sie ihre Umgebung modifiziert. An den Grenzbereichen zum Polycarbonatsubstrat sowie zur Reflexionsschicht entstehen Blasen und andere Deformationen. Diese lokalen Modifikationen können durch geeignete Optiken als binäre Intensitätsmuster ausgelesen werden. Derartige Speichermedien lassen sich aufgrund der Irreversibilität der Modifikationen nur einmal beschreiben, aber beliebig oft auslesen (write once read many: WORM Disk).

Der seit kurzem am Markt erhältliche wiederbeschreibbare Datenträger CD-RW nutzt ebenfalls gezielt thermische Effekte im Fokus eines Schreiblasers aus: Bei dünnen Schichten ternärer oder quaternärer Verbindungen (z. B. aus Te-Se-Sn oder Ge-Sb-Te), die das Licht des Schreiblasers absorbieren, werden die unterschiedlichen Reflektivitäten des amorphen und des kristallinen Zustandes ausgenutzt (phase change).

Zwischen den beiden Phasen kann durch geeignete Heiz- und Kühlprozesse hin- und hergeschaltet werden, die während und nach einem Lichtpuls mit geeignetem Intensitätsverlauf oder durch eine geeignete Abfolge von Lichtpulsen auftreten: Der amorphe Zustand wird durch hinreichend hohe Laserleistungen erzeugt, die das Material lokal auf eine Temperatur höher als der materialspezifische Schmelzpunkt bringt. Dem Lichtpuls folgt ein schnelles Abkühlen des Materials (qucnching) auf Raumtemperatur. Der kristalline Zustand hingegen formiert sich aus einem orientierungsisotropen Zustand bei Temperaturen, die oberhalb der Kristallisationstemperatur, aber unterhalb der Schmelztemperatur liegen. Die Kristallisationsgeschwindigkeit ist materialabhängig.

Insbesondere die beschriebenen einmalbeschreibbaren Systeme haben zwei große Nachteile: Zum einen bestimmten die Kosten der i.a. aus Gold bestehenden Reflexionsschicht entscheidend die Herstellungskosten. Goldschichten garantieren die benötigte chemische Inertheit (Oxidationsbeständigkeit) und sind notwendig, um den in den CD-Spezifikationen geforderten Reflexionswerten beim Auslesen zu genügen. Zum anderen besteht ein Nachteil in der bereits im Grundsatz begrenzten Lagerstabilität. Die derzeit kommerziell verfügbaren Systeme sind zudem stark tageslichtempfindlich.

Ein anwendungsrelevantes Potential für die permanente digitale Datenspeicherung weisen photoadressierbare Polymere oder Oligomere auf, an deren Polymerhauptketten lichtaktive Azofarbstoffe als Seitengruppen chemisch angebunden sind. Aus der Literatur ist bekannt, dass man durch die Bestrahlung mit polarisiertem Laserlicht Isomerisierungszyklen in den Azofarbstoffen anregen kann, die zu gerichteten Umlagerungen dieser Farbstoffmoleküle führen. Damit können hohe Formanisotropien, d.h. Doppelbrechungen, aufgebaut und wiedergelöscht werden. Um diesen Effekt für die binäre und/oder die Multibit-Speicherung einzusetzen, wird üblicherweise das Konzept des "Reverse Writing" mit Vorbelichtung (EP-A 900 239) verwendet. In einem Vorbelichtungsschritt wird dabei zunächst die Funktionsschicht durch das polarisierte Licht eines cw-Lasers oder einer Lampe in einen doppelbrechenden Ausgangszustand versetzt. Dieser Schritt dauert typischerweise einige Sekunden bis Minuten, je nach verwendeter Intensität der Lichtquelle. Die Geschwindigkeit der Vorbelichtung ist bei gegebenen Belichtungsparametern durch die Lichtempfindlichkeit der Funktionsschicht gegeben.

In der so vorformatierten Schicht können die Doppelbrechungen durch gepulste Belichtung durch den sog. Schreiblaser nach dem "Reverse Writing"-Prinzip stufenlos lokal gelöscht werden. Die unterschiedlichen Grade an Anisotropie können über die Depolarisation des Lichts eines Leselasers und geeignete Polarisationsoptiken in binäre, wie auch Multibit-Signale umgewandelt werden.

Die Vorbelichtung ist dadurch gekennzeichnet, dass das Licht nicht gezielt auf die Funktionsschicht fokussiert ist, so dass zeitgleich mehrere Speicherplätze auf der Funktionsschicht erreicht werden. Die Intensitäten liegen typischerweise zwischen 0,01 und 10 $W/cm^2$.

Die gepulste Belichtung ist dadurch gekennzeichnet, dass Laserlicht auf die Funktionsschicht fokussiert wird, während ein Laser im Pulsbetrieb oder im Continuous-Wave- (cw-) Betrieb die Funktionsschicht abtastet. Im ersten

Fall kann ein Puls oder eine Pulsfolge mit geeignetem Intensitätsverlauf anliegen. Im zweiten Fall muss eine entsprechende Intensitätsmodulation des cw-Lasers vorherrschen. Die Belichtungsdauer liegt in beiden Fällen zwischen 0,1 ns und 1000 ns, bevorzugt zwischen 1 und 200 ns, besonders bevorzugt zwischen 3 und 4 ns. Es werden typischerweise Intensitäten zwischen 0,01 und 10 MW/cm$^2$ erreicht. Alternativ kann auf das Abtasten des Lasers verzichtet werden, falls auf eine andere Weise für eine Relativbewegung zwischen Medium und Laserspot, beispielsweise durch ein Rotieren des Mediums, gesorgt wird.

Die Lichtsensitivität für den beschriebenen Zeitbereich ist definiert als der Quotient aus dem durch die gepulste Belichtung maximal induzierbaren Doppelbrechungswert $\Delta n$ und der Energiedichte E des Lichts.

Das "Reverse Writing" ist gekennzeichnet durch die gepulste Belichtung der Funktionsschicht und beschreibt den Abbau einer bestehenden Doppelbrechung. Dabei werden deutlich höhere Intensitäten als bei der Vorbelichtung erreicht. Die Konsequenzen sind: Der Abbau der Doppelbrechung kann deutlich schneller als bei der Vorbelichtung erfolgen; durch die hohen Intensitäten des Laserlichts werden aber auch thermische Effekte induziert, die zu einer lokalen Temperaturerhöhung in der Funktionsschicht führen können.

Für dieses "Reverse Writing" können thermische Effekte insofern ausgenutzt werden, dass sie eine ungerichtete Rotationsdynamik statistischen Ursprungs in den Seitenketten induzieren. Für das Wirkprinzip dieses Verfahrens sind die Lichtsensitivitäten der Polymere folglich weitgehend irrelevant.

Für die Realisierung eines einmal beschreibbaren Speichermediums, z.B. im Format der CD-R oder DVD-R, über das eben beschriebene Speicherkonzept "Reverse Writing mit Vorbelichtung" muss der zeitaufwendige Vorbelichtungsschritt in den Herstellungsprozess des Datenträgers integriert werden.

Um ein wiederbeschreibbares Speichermedium, z.B. im Format der CD-RW, über dieses Speicherkonzept zu realisieren, müsste entweder die Funktionsschicht vor jedem Schreibvorgangformatiert werden oder eine technologisch aufwendige Synchronisierung der beiden beschriebenen Belichtungsschritte realisiert werden, die ein direktes Überschreiben von Information ("Direct Overwrite") ermöglicht.

Der Vorbelichtungsschritt konnte bisher nicht umgangen werden, da der Aufbau von Doppelbrechungen durch gepulste Belichtung, ausgehend von isotropen Zustand von photoadressierbaren Polymeren oder Oligomeren nicht möglich war. Als Folge der geringen Lichtsensitivitäten genügten die induzierbaren Doppelbrechungsänderungen nicht den technischen Anforderungen an die Signal-Rausch-Verhältnisse beim Auslesen, d.h. die Depolarisation eines Leselasers, welche über geeignete Optiken in einen Intensitätskontrast zwischen einer gepulst belichteten und einer isotropen unbelichteten Stelle der Aufzeichnungsschicht umgesetzt wird, ist zu gering, um die binären oder multibinären Informationen fehlerfrei dekodieren zu können.

Die Steigerung der Doppelbrechungsänderungen durch Verwendung höherer Intensitäten gelang nicht, da die gepulste Belichtung in den erforderlichen Intensitätsbereichen zu einer thermisch induzierten Zerstörung der Funktionsschicht führt. Es bestand also der Bedarf nach einem alternativen schnellen Speicherverfahren auf der Basis photoadressierbarer Materialien.

Überraschenderweise hat sich gezeigt, dass es bei der erfindungsgemäßen Wahl der Laserquelle und der Belichtungsbedingungen möglich ist, in erfindungsgemäßen photoadressierbaren Polymeren oder Oligomeren Doppelbrechungen durchgepulste Belichtung zu induzieren. Dieses Prinzip heißt "Forward Writing", weil Doppelbrechungen über Laserpulse ausgehend von einem isotropen Zustand sukzessive aufgebaut werden können. Die für das erfindungsgemäße Verfahren geeigneten Materialien zeichnen sich durch eine hohe Geschwindigkeit bei der gerichteten molekularen Umorientierung aus.

Aus der US-A-5 173 381 und der DE-A-3810722 ist ein Verfahren gemäß dem Oberbegriff des Ansprüchs 1 bekkant.

Gegenstand der Anmeldung ist ein Verfahren gemäß Anspruch 1 zur Speicherung digitaler binärer oder nichtbinärer Informationen, bei dem ein Speichermedium, bestehend aus mindestens einer Substratschicht und mindestens einer Aufzeichnungsschicht durch einen fokussierten Laserstrahl abgetastet wird, der mit unterschiedlichen Energien und/oder Polarisationszuständen arbeitet. Der Laser kann im Pulsbetrieb oder durch Intensitätsmodulation im Continuous-Wave-Betrieb arbeiten. Alternativ kann auf das Abtasten des Lasers verzichtet werden, falls auf eine andere Weise für eine Relativbewegung zwischen Medium und Laserspot, beispielsweise durch ein Rotieren des Mediums, gesorgt wird.

Gegenstand der Anmeldung ist weiterhin ein Verfahren zum optischen Einschreiben, Überschreiben und Löschen optisch auslesbarer digitaler Informationen in ein flächig ausgedehntes Speichermedium, wobei der optische Einschreibprozess in einem Aufbau oder Abbau von Doppelberechnungen einer Aufzeichnungsschicht resultiert, ohne dass sich die Aufzeichnungsschicht chemisch zersetzt oder verändert und ohne dass sich die Oberflächentopographien einer der Schichten des Speichermediums maßgeblich verändern.

Das "Forward Writing" führt zu neuartigen Speicherkonzepten. Die gepulste Belichtung kann zum Einschreiben, aber auch zum Überschreiben und/oder Löschen von Daten eingesetzt werden. Das Einschreiben einer Doppelbrechung in eine isotrope Polymermatrix geschieht über einen linear polarisierten Schreiblascr. Die Doppelbrechung kann rein optisch stufenlos gelöscht werden, z.B. durch Drehung der Polarisationsrichtung um 90° oder mittels zirkular

polarisiertem Licht gelöscht werden. Die Höhe der über einen Puls induzierten Doppelbrechungsänderung wird über die Pulsenergie eingestellt.

Der Grad an Anisotropie jedes Speicherplatzes der Funktionsschicht kann mit einem Leselaser mit definiertem Polarisationszustand (linear, zirkular oder elliptisch) und einem optischen Messsystem in eine Signalstärke übersetzt werden. Der maximale Kontrast wird z.B. im Falle linearer Polarisation erreicht, wenn die Polarisationsrichtung des Leselascrs 45° zur Polarisation der Forward-Schreibpulse einnimmt. Je nach Größe der Anisotropie kann nicht nur ein binäres, sondern auch ein Multi-Bit-Speicherprinzip realisiert werden, das auf abgestuften Signalhöhen, den sog. Graustufen basiert. Das Graustufenprinzip erhöht die Datenmenge im Vergleich zu der binären Speicherung bei gleicher Anzahl an Speicherplätzen.

Das erfindungsgemäße Verfahren ermöglicht bei binärer Speicherung Schreibgeschwindigkeiten, die mit denen der CD-R vergleichbar sind. Bei dem Einsatz von N Graustufen, mit $N = 2^m$ (m ist eine ganze Zahl größer als 1), können in jedem Speicherplatz nicht nur 1 bit, wie bei der binären Speicherung, sondern m bit abgelegt werden. Unter Vernachlässigung des zeitlichen Aufwandes für die Dekodierung erhöht sich die Datenübertragungsrate dann um den Faktor m.

Bei der erfindungsgemäßen Materialauswahl für die Aufzeichnungsschicht ist dieses Speicherverfahren in guter Näherung reversibel. Durch beispielsweise Änderung der Polarisationsrichtung und der Pulsenergien des Schreiblasers können die Graustufen für jeden Speicherplatz wiederholbar erhöht oder erniedrigt werden. Damit können bestehende Informationen gelöscht und/oder überschrieben werden.

Die Pulsenergie beim "Forward Writing" darf einen materialspezifischen Schwellwert nicht überschreiten, der zwischen 0,1 und 1000 $mJ/cm^2$, bevorzugt zwischen 1 und 100 $mJ/cm^2$ liegt.

Der Abbau der Doppelbrechung kann nach mindestens zwei rein photonischen und mindestens einer thermisch unterstützten Methode erfolgen:

- Über einen Laserpuls, dessen Polarisation gegenüber der Vorwärtsrichtung um 90° gedreht ist und der die eben beschriebene Energieschwelle nicht überschreitet (photonisches "Reverse Writing").
- Über einen Laserpuls mit zirkularer Polarisation, dessen Energie die eben beschriebene Schwelle nicht überschreitet.
- Über einen Laserpuls, der die eben beschriebene Schwelle überschreitet. Der Polarisationszustand des Pulses ist unerheblich. Thermische Effekte, die im Lichtfokus auftreten, können die Höhe des Doppelbrechungssprunges erhöhen.

Die Hauptanforderung an das erfindungsgemäße Speichermaterial ist, dass es photoaktiv für Licht im sichtbaren Wellenlängenbereich ist, so dass Anisotropien, also Doppelbrechungswerte photonisch geändert werden können. Die erfindungsgemäße Materialklasse zeichnet sich durch eine hohe Lichtsensitivität bevorzugt $\frac{\Delta n}{E} \geqq 0{,}3 \frac{cm^2}{J}$ im Wellenlängenbereich von 390 nm bis 580 nm, bevorzugt von 400 nm bis 532 nm, besonders bevorzugt von 514 nm bis 532 nm sowie von 380 bis 415 nm aus. Die Lichtsensitivität bezieht sich auf Lichtpulse der Dauer 0,1 ns bis 1000 ns, bevorzugt 1 bis 200 ns, besonders bevorzugt 3 bis 4 ns, wobei die Lichtsensitivität definiert ist als der Quotient aus dem durch einen Laserpuls maximal induzierbaren Doppelbrechungswert $\Delta n$ und der Energiedichte E dieses Lichtpulses. Die Lichtsensibilisierung muss so hoch sein, dass die durch einen Laserpuls induzierbare Doppelbrechung bei "Forward Writing" mindestens 1 %, bevorzugt mindestens 3 % des Wertes beträgt, der durch monochromatische Bestrahlung mit dem linear polarisierten Licht eines cw-Lasers im sichtbaren Wellenlängenbereich (350 nm bis 780 nm) maximal erreicht werden kann und der Wert der induzierten Doppelbrechung größer als 0,03, bevorzugt 0,08 ist.

Die Schreibwellenlänge liegt im Absorptionsbereich der Aufzeichnungsschicht, insbesondere im Bereich hoher Lichtsensitivität der erfindungsgemäßen Materialklasse.

Die Lesewellenlänge kann entweder der Schreibwellenlänge gleichen oder langwelliger gewählt werden. Liegt die Lesewellenlänge im Bereich der hohen Lichtsensitivität der Aufzeichnungsschicht, so muss die Intensität kleiner als 10 %, bevorzugt kleiner als 5 %, besonders bevorzugt kleiner als 1 % der Intensität des Schreiblasers gewählt werden.

Als bevorzugtes Material wurde gefunden, dass sich Polymere/Oligomere eignen, an deren Hauptketten Seitengruppenmoleküle unterschiedlicher Art chemisch angebunden sind, wobei mindestens eine Art das Licht des sog. Schreiblasers absorbiert. Bevorzugt als Seitengruppenmoleküle sind lichtaktive Azofarbstoffe. Aus der Literatur ist bekannt, dass man in diesen hohe Formanisotropien durch die Bestrahlung mit polarisiertem Laserlicht aufbauen und wieder löschen kann.

Die mikroskopischen Ursachen für eine hohe Lichtsensitivität sind:

- eine hohe photonische Quantenausbeute für den Übergang eines Farbstoffmoleküls ("Chromophor") vom gestreckten *trans*- in den gewinkelten *cis*-Zustand.
- eine starke Formanisotropie der Seitenkettenmoleküle, gemessen am Verhältnis der Polarisierbarkeiten parallel

und senkrecht zu der Molekülachse.

- hohe Orientierungsgrade, d.h. eine hohe Beweglichkeit der Seitenkettenmoleküle, die eine relativ zur Polarisationsrichtung des Schreiblasers gerichtete Dynamik mit großen Drehwinkeln ermöglicht.
- an die Wellenlänge des Leselasers angepasste Absorptionsbanden, die zu einer starken Resonanzüberhöhung des ausgelesenen Doppelbrechungswertes führen.

Als Speichermedium kann jeder flächige Mehrschichtaufbau dienen, der aus mindestens einer Substratschicht, bevorzugt bestehend aus Polycarbonat, Polymethylmethacrylat (PMMA) oder hydriertem Polystyrol (h-PS) und mindestens einer Aufzeichnungsschicht, bestehend aus den erfindungsgemäßen Polymeren/Oligomeren, besteht. Die Aufzeichnungsschicht weist eine Dicke von 50 nm bis 500 nm auf, bevorzugt von 150 nm bis 250 nm, besonders bevorzugt von 190 nm bis 210 nm auf.

Jede Aufzeichnungsschicht kann optional von zwei Schichten (enhancement layers) umgeben sein, bevorzugt bestehend aus Siliziumnitrid (SiN). Diese führen durch verstärkte Mehrfachreflexionen des Lichts des Leselasers innerhalb der Aufzeichnungsschicht zu höheren Lesesignalen.

Durch die an die Aufzeichnungsschicht angrenzenden Schichten können Pre-Groove-Strukturen vorgegeben werden, d.h. Abfolgen von Mulden, die die späteren Speicherplätze festlegen und abgrenzen.

An jeder Grenzfläche, bevorzugt an der Grenzfläche Aufzeichnungsschicht - Substratschicht, kann eine weitere Zwischenschicht eingefügt werden, die durchlässig für das Licht der verwendeten Laser ist.

Die Unterseite des Speichermediums ist durch die aussenliegende Substratschicht definiert. Die Oberseite liegt gegenüber.

Das Einschreiben, wie auch das Auslesen der gespeicherten Informationen mittels Laser kann von der Ober- wie auch von der Unterseite erfolgen.

Das Auslesen der gespeicherten Informationen mittels Laser kann in Transmission, wie auch in Reflexion erfolgen.

Beim Einschreiben von der Unterseite und Auslesen in Reflexion kann eine reflektierende Schicht eine Aufzeichnungsschicht bedecken. Bevorzugtes Material ist Gold. Alternativ kann auch Silber oder Aluminium verwendet werden. Die Reflexionsschicht hat eine typische Dicke von 10-100 nm.

Auf der Oberseite des Speichermediums befindet sich optional eine Schutzschicht, bevorzugt bestehend aus Epoxidharz, die als UV-Schutz und zum Schutz vor mechanischer Beanspruchung dient.

Aufzeichnungsmaterial, das bevorzugt ist:

Bei der Gruppierung, die mit der elektromagnetischen Strahlung in Wechselwirkung tritt, handelt es sich um einen Azofarbstoff. Das erfindungsgemäße Material enthält folglich mindestens einen Azofarbstoff.

Azofarbstoffe haben beispielsweise die folgende Struktur der Formel (I)

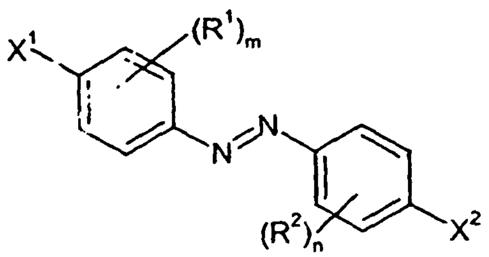

(I),

worin

| | |
|---|---|
| $R^1$ und $R^2$ | unabhängig voneinander für Wasserstoff oder einen nichtionischen Substituenten stehen und |
| m und n | unabhängig voneinander für eine ganze Zahl von 0 bis 4, vorzugsweise 0 bis 2 stehen. |
| $X^1$ und $X^2$ | bedeuten $-X^{1'}-R^3$ bzw. $X^{2'}-R^4$, |

worin

| | |
|---|---|
| $X^{1'}$ und $X^{2'}$ | für eine direkte Bindung, -O-, -S-, $(N-R^5)$-, $-C(R^6R^7)$-, -(C=O)-, -(CO-O)-, $-(CO-NR^5)$-, $-(SO_2)$-, $-(SO_2-O)$-, $-(SO_2-NR^5)$-, $-(C=NR^8)$- oder $-(CNR^8-NR^5)$- stehen, |

$R^3$, $R^4$, $R^5$ und $R^8$ unabhängig voneinander für Wasserstoff, $C_1$- bis $C_{20}$-Alkyl, $C_3$-bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)- stehen oder

$X^{1'}$-$R^3$ und $X^{2'}$-$R^4$ für Wasserstoff, Halogen, Cyan, Nitro, $CF_3$ oder $CCl_3$ stehen können,

$R^6$ und $R^7$ unabhängig voneinander für Wasserstoff, Halogen, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl stehen.

Unter nichtionischen Substituenten sind zu verstehen Halogen, Cyano, Nitro, $C_1$- bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl oder $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-($SO_2$)-, $C_1$- bis $C_{20}$-Alkyl-(C=O)-O-, $C_1$- bis $C_{20}$-Alkyl-(C=O)-NH-, $C_6$-bis $C_{10}$-Aryl-(C=O)-NH-, $C_1$- bis $C_{20}$-Alkyl-O-(C=O)-, $C_1$- bis $C_{20}$-Alkyl-NH-(C=O)- oder $C_6$- bis $C_{10}$-Aryl-NH-(C=O)-.

Die Alkyl-, Cycloalkyl-, Alkenyl- und Arylreste können ihrerseits durch bis zu 3 Reste aus der Reihe Halogen, Cyano, Nitro, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl substituiert sein und die Alkyl- und Alkenylreste können geradkettig oder verzweigt sein.

Unter Halogen ist Fluor, Chlor, Brom und Iod zu verstehen, insbesondere Fluor und Chlor.

Bei dem erfindungsgemäßen Aufzeichnungsmaterial handelt es sich bevorzugt um polymeres oder oligomeres organisches, amorphes Material besonders bevorzugt um ein Seitenkettenpolymer.

Die Hauptketten des Seitenkettenpolymeren entstammen den folgenden Grundstrukturen: Polyacrylat, Polymethacrylat, Polysiloxan, Polyharnstoff, Polyurethan, Polyester oder Zellulose. Bevorzugt sind Polyacrylat und Polymethacrylat.

Die Farbstoffe, insbesondere die Azofarbstoffe der Formel (I) sind an diese Polymergerüste kovalent gebunden, in der Regel über einen Spacer. Beispielsweise steht $X^1$ (oder $X^2$) dann für einen solchen Spacer, insbesondere in der Bedeutung $X^{1'}$-$(Q^1)_i$-$T^1$-$S^1$-,
wobei

$X^{1'}$ die oben angegebene Bedeutung besitzt,

$Q^1$ für -O-, -S-, -(N-$R^5$)-, -C($R^6R^7$)-, -(C=O)-, -(CO-O)-, -(CO-$NR^5$)-, - ($SO_2$)-, -($SO_2$-O)-, -($SO_2$-$NR^5$)-, -(C=$NR^8$)-, -(C$NR^8$-$NR_5$)-, -$(CH_2)_p$-, p- oder m-$C_6H_4$- oder einen zweibindigen Rest der Formeln

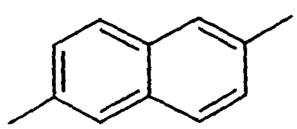
oder
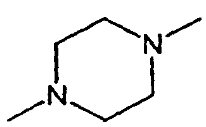

steht,

i für eine ganze Zahl von 0 bis 4 steht, wobei für i > 1 die einzelnen $Q^1$ verschiedene Bedeutungen haben können,

$T^1$ für -$(CH_2)_p$- steht, wobei die Kette durch -O-, -$NR^9$-, oder -$OSiR^{10}{}_2O$-unterbrochen sein kann,

$S^1$ für eine direkte Bindung, -O-, -S- oder -$NR^9$- steht,

p für eine ganze Zahl von 2 bis 12, vorzugsweise 2 bis 8, insbesondere 2 bis 4 steht,

$R^9$ für Wasserstoff, Methyl, Ethyl oder Propyl steht,

$R^{10}$ für Methyl oder Ethyl steht und

$R^5$ bis $R^8$ die oben angegebene Bedeutung besitzen.

Bevorzugte Farbstoffmonomere für Polyacrylate oder -methacrylate haben dann die Formel (II)

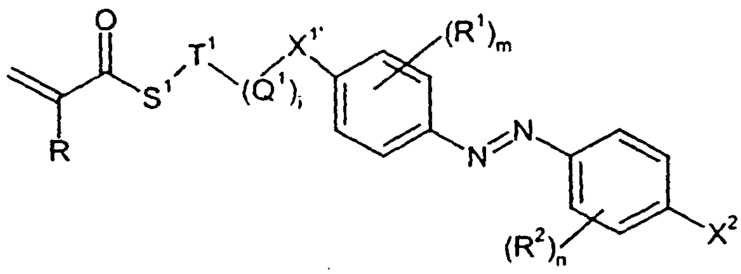

(II),

worin

R für Wasserstoff oder Methyl steht und

die anderen Reste die oben angegebene Bedeutung besitzen.

Das erfindungsgemäße polymere oder oligomere organische, amorphe Material kann neben den Farbstoffen, beispielsweise der Formel (I), formanisotrope Gruppierungen tragen. Auch diese sind, in der Regel über einen Spacer, an die Polymergerüste kovalent gebunden.

Formanisotrope Gruppierungen haben beispielsweise die Struktur der Formel (III)

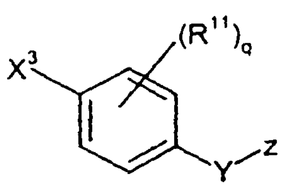

(III),

worin Z für einen Rest der Formeln

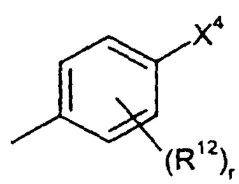

(IIIa)

oder

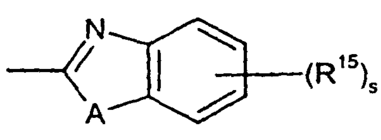

(IIIb)

steht,
worin

A für O, S oder N-$C_1$- bis $C_4$-Alkyl steht,

$X^3$ für $-X^{3'}-(Q^2)_j-T^2-S^2-$ steht,

| | |
|---|---|
| $X^4$ | für $X^{4'}$-$R^{13}$ steht, |
| $X^{3'}$ und $X^{4'}$ | unabhängig voneinander für eine direkte Bindung, -O-, -S-, -(N-$R^5$)-, -C($R^6R^7$)-, -(C=O)-, -(CO-O)-, -(CO-$NR^5$)-, -($SO_2$)-, -($SO_2$-O)-, -($SO_2$-$NR^5$)-, -(C=$NR^8$)- oder -(C$NR^8$-$NR^5$)- stehen, |
| $R^5$, $R^8$ und $R^{13}$ | unabhängig voneinander für Wasserstoff, $C_1$- bis $C_{20}$-Alkyl, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)- stehen oder |
| $X^{4'}$-$R^{13}$ | für Wasserstoff, Halogen, Cyan, Nitro, $CF_3$ oder $CCl_3$ stehen kann, |
| $R^6$ und $R^7$ | unabhängig voneinander für Wasserstoff, Halogen, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl stehen, |
| Y | für eine einfache Bindung, -COO-, OCO-, -CONH-, -NHCO-, -CON($CH_3$)-, -N($CH_3$)CO-, -O-, -NH- oder -N($CH_3$)- steht, |
| $R^{11}$, $R^{12}$, $R^{15}$ | unabhängig voneinander für Wasserstoff, Halogen, Cyano, Nitro, $C_1$-bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl oder $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-($SO_2$)-, $C_1$- bis $C_{20}$-Alkyl-(C=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$- bis $C_{20}$-Alkyl-NH-(C=O)- oder $C_6$- bis $C_{10}$-Aryl-NH-(C=O)- stehen, |
| q, r und s | unabhängig voneinander für eine ganze Zahl von 0 bis 4, vorzugsweise 0 bis 2 stehen, |
| $Q^2$ | für -O-, -S-, -(N-$R^5$)-, -C($R^6R^7$)-, -(C=O)-, -(CO-O)-, -(CO-$NR^5$)-, -($SO_2$)-, -($SO_2$-O)-, -($SO_2$-$NR^5$)-, -(C=$NR^8$)-, -(C$NR^8$-$NR^5$)-, $-(CH_2)_p-$, p- oder m-$C_6H_4$- oder einen zweibindigen Rest der Formeln |

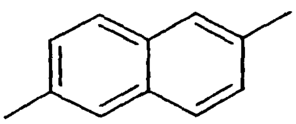
oder
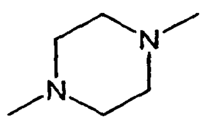

steht,

| | |
|---|---|
| j | für eine ganze Zahl von 0 bis 4 steht, wobei für j > 1 die einzelnen $Q^1$ verschiedene Bedeutungen haben können, |
| $T^2$ | für $-(CH_2)_p-$ steht, wobei die Kette durch -O-, -$NR^9$-, oder -OSi$R^{10}_2$O-unterbrochen sein kann, |
| $S^2$ | für eine direkte Bindung, -O-, -S- oder -$NR^9$- steht, |
| p | für eine ganze Zahl von 2 bis 12, vorzugsweise 2 bis 8, insbesondere 2 bis 4 steht, |
| $R^9$ | für Wasserstoff, Methyl, Ethyl oder Propyl steht und |
| $R^{10}$ | für Methyl oder Ethyl steht. |

**Beispiele**

**Beispiel 1**

**Auf- und Abbau der Doppelbrechung durch Forward Writing und Reverse Writing**

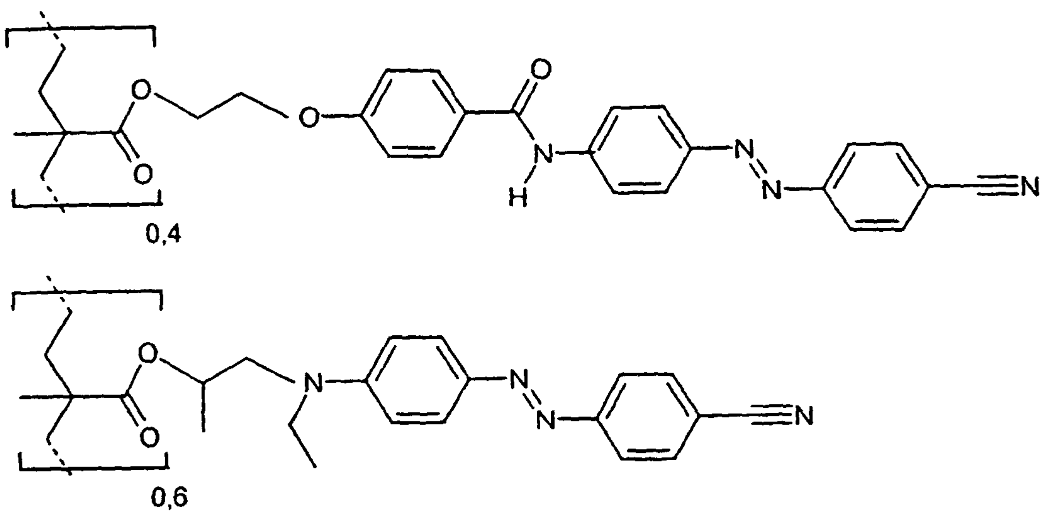

1

Polymer Seitenketten

Ein 1 mm dickes Glassubstrat wird mit einer dünnen Schicht des Polymers 1 versehen. Dies geschieht mit Hilfe der Drehschleudertechnik ("spin coating"). Dabei wird das Polymer bei einer Konzentration von 50 g/l in Tetrahydrofuran gelöst und die Lösung auf das sich mit einer Umdrehungszahl von 2000 $min^{-1}$ drehende Substrat aufgetropft. Der entstandene Polymerfilm hat eine Dicke von 680 nm. Durch die Lagerung des beschichteten Glasträgers für 2 h bei 60°C im Vakuumofen werden Reste des Lösungsmittels aus dem Film entfernt.

Mit einem optischen Aufbau können Doppelbrechungen $\Delta n$ über Pulsfolgen in der ursprünglich isotropen Polymerschicht induziert werden. Als Lichtquelle dient ein optisch-parametrischer Oszillator der von einem frequenzverdoppelten Nd:YAG-Laser mit der Wellenlänge 532 nm gepumpt wird und bei der Wellenlänge 514 nm emittiert. Lichtpulse der Dauer 4 ns können n:it einer Wiederholrate von 10 Hz emittiert werden. Das Licht ist linear polarisie t und dient zum Einschreiben der Doppelbrechung. Der Schreibstrahl durchläuft einen Homogenisator, der eine gleichmäßigere Intensität am Probenort liefert (senkrechter Einfall). Die Pulsenergie am Probenort liegt bei 6,5 $mJ/cm^2$.

Als Leselaser wird ein HeNe-Laser verwendet (2 mW Ausgangsleistung, Intensität am Probenort: 1 $mW/cm^2$, Einfallswinkel 10°). Die Lesepolarisation ist um 45° gegen die Schreibpolarisation gedreht. Das Diodensignal wird nach einem senkrecht zur Lesepolarisation orientierten Analysator rechnergesteuert aufgezeichnet ( Signal $I_s(t)$ ). Für jede unbelichtete Polymerschicht wird das Signal nach dem parallel zur einfallenden Lesepolarisation orientierten Analysator an der unbelichteten Probe ermittelt ($I_p^0$). Die Doppelbrechung wird über die Relation

$$\Delta n(t) = \frac{633\ \text{nm}}{d\pi} \arcsin \sqrt{\frac{I_s(t)}{I_p^{\,0}}}$$

ermittelt (d ist die Polymerschichtdicke).

Die Polymerschicht ist nach der Präparation isotrop in der Filmebene. Die Optische Dichte bei der Schreibwellenlänge beträgt 1,34; bei der Lesewellenlänge ist sie kleiner als 0,02. Über das Schreiblicht werden in den absorbierenden Seitengruppenmolekülen *trans-cis-trans*-Isomerisierungszyklen induziert, was zu einem Aufbau einer Nettoorientierung der Moleküle weg von der Polarisationsrichtung des Lasers führt ("Forward Writing"). Diese Moleküldynamik zeigt sich makroskopisch in einer sich ausbildenden Doppelbrechung $\Delta n = n_y - n_x$ in der Polymerfilmebene. Der Brechungsindex in Richtung der Polarisation des Laserlichts ($n_x$) sinkt bei diesem Prozess, während der Brechungsindex senkrecht zur Polarisationsrichtung ($n_y$) anwächst. Durch eine Folge von Laserpulsen bildet sich sukzessive eine

Doppelbrechung aus, die auf einem Maximalwert zwischen 0,04 und 0,06 sättigt.

Δn wird durch Drehen der Polarisationsrichtung des Schreiblichts um 90° gelöscht ("Reverse Writing"). D eser Löschvorgang ist abgeschlossen, sobald gilt: Δn=0. Dies ist gleichbedeutend mit einem Wert $I_s$=0, der über eine Diode detektiert wird.

Ein weiterer Schreibvorgang wird nach gleichem Muster direkt an diesen ersten angeschlossen. Die Doppelbrechung sättigt auf einen Wert, der im Rahmen der Messgenauigkeit mit dem des ersten Schreibvorgangs vergleichbar ist.

__Beispiel 2__

**Energieabhängigkeit der Doppelbrechungssprünge bei Forward Writing**

Der in Beispiel 1 beschriebene optische Aufbau wird verwendet, um die Abhängigkeit der Höhe der Doppelbrechungssprünge von der Pulsenergie aufzuzeichnen. Untersucht wird eine 335 nm dicke Schicht des gezeigten Polymers.

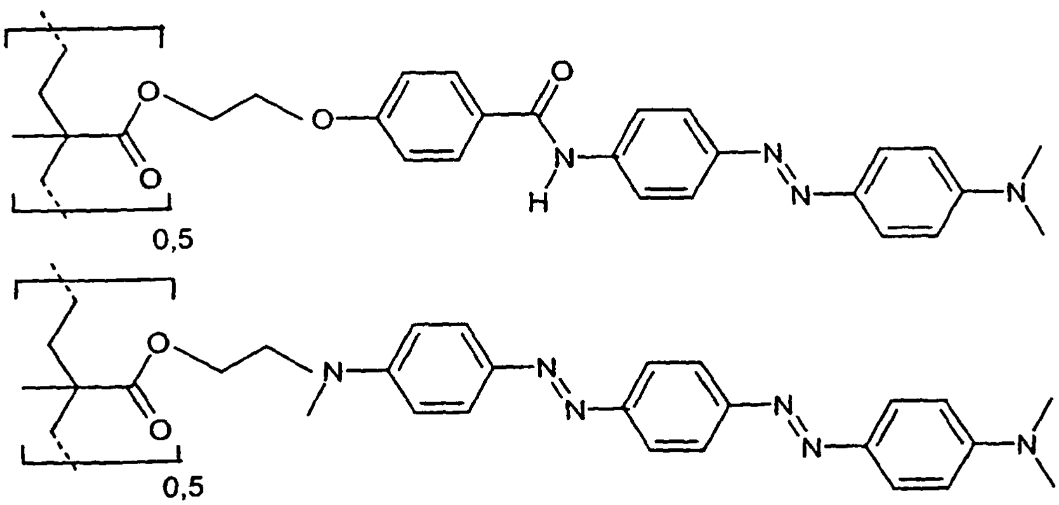

0,5

0,5

2

Polymer Seitenketten

Die nach einem linear polarisierten Lichtpuls induzierte Doppelbrechung wird bei der Wellenlänge 633 nm ausgelesen. Die Energiedichte *E* des Pulses (Intensität x Pulsdauer) wird zwischen 2 und 18 mJ/cm$^2$ variiert. Die statistischen Schwankungen in der Pulsenergie *E* werden gezielt ausgenützt, um aus den gewonnenen Daten den funktionellen Zusammenhang $\Delta n(E)$ zu erhalten. Für kleine Energien werden zusätzlich Neutraldichtefilter eingesetzt.

Zeitgleich zum Lesevorgang wird die Intensität des Pulses detektiert. Dazu wird ein Teil des Schrelbstrahles über einen Strahlteiler vor der Probe ausgekoppelt und auf eine Photodiode gelenkt.

Aus apparativen Gegebenheiten heraus werden auf eine ursprünglich isotrope Stelle der Polymerschicht mehrere Pulse gegeben. Um die Auswertung $\Delta n(E)$ nicht durch Sättigungseffekte in der Anisotropie des Polymers zu verfälschen, wird aber darauf geachtet, dass die erzeugte Doppelbrechung kleiner als 10% des maximal durch Belichtung mit einem cw-Schreiblaser erreichbaren Wertes bleibt (Δn=0.3; Schreibwellenlänge 514 nm; Schreibintensität 100 mW/cm$^2$; Lesewellenlänge 633 nm).

Der Ablauf $\Delta n(E)$ zeigt in guter Näherung ein lineares Verhalten für das Polymer 2, sofern die Energiedichten der Forward-Writing-Pulse kleiner als 10 mJ/cm$^2$ gewählt werden. Es werden in diesem Energiebereich Doppelbrechungsänderungen von bis zu $\Delta n=(3{,}3\pm0{,}3)\cdot10^{-3}$ induziert. Bei Energiedichten oberhalb von 10 mJ/cm$^2$ ist ein Abweichen vom linearen Verhalten zu kleineren Δn-Werten zu erkennen. Der Forward-Writing-Prozess ist gestört. Die Ursache kann photonischer oder auch thermischer Natur sein, z.B. ein starkes lokales Aufheizen des Polymers, welches ungerichtete Orientierungsrelaxationen hervorruft, oder eine beginnende Oberflächenschädigung der Polymerschicht.

Weitere Beispiele von Polymeren/Copolymeren, die im erfindungsgemäßen Verfahren bevorzugt eingesetzt werden und die nach den allgemeinen Synthesevorschriften, die in EP-A 823 442 beschrieben sind, hergestellt wurden.

Beispiel A (x:y=60:40)

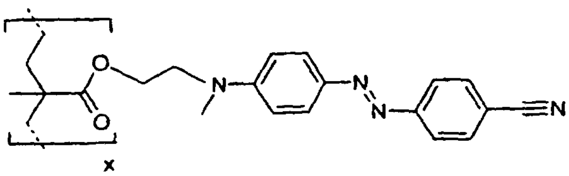

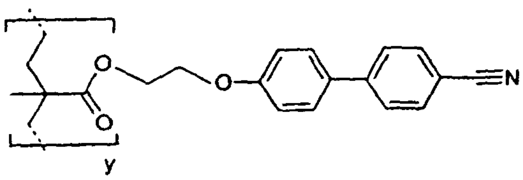

Beispiel B (x:y=40:60)

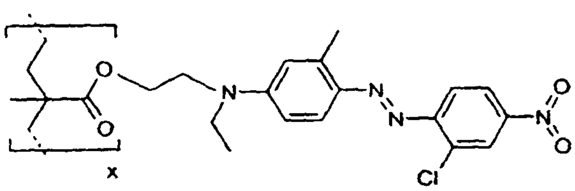

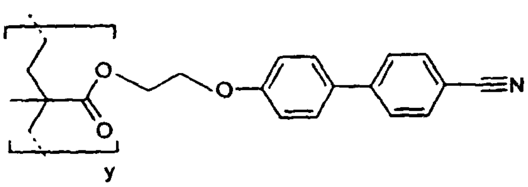

Beispiel C (x:y=40:60)

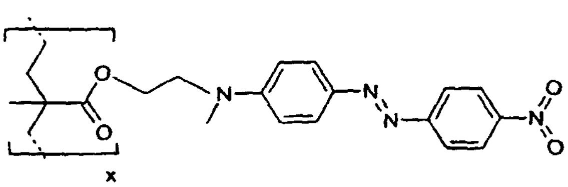

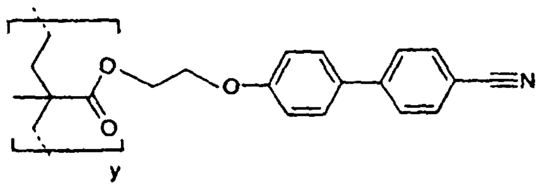

Beispiel D

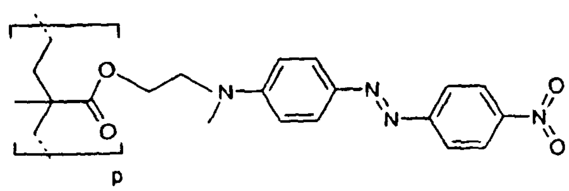

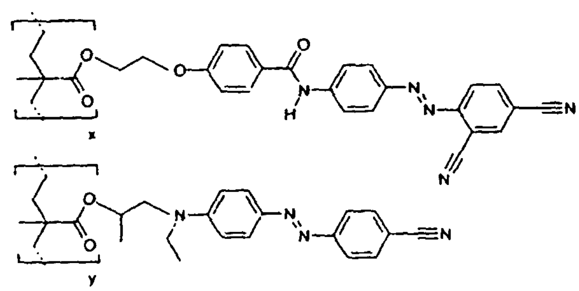

Beispiel F (x:y=40:60)

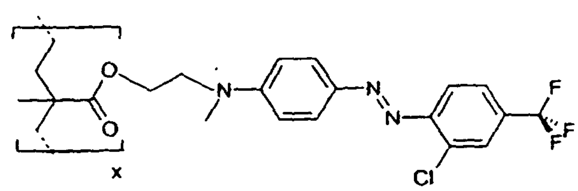

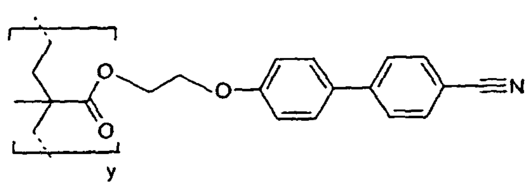

Beispiel G (x:y=50:50)

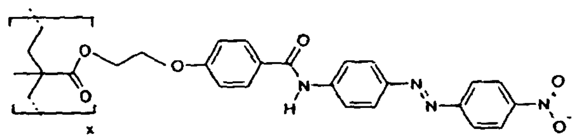

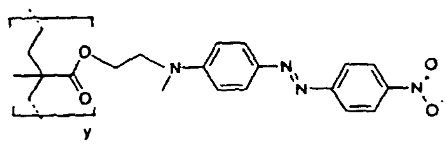

Beispiel H (x:y=30:70)

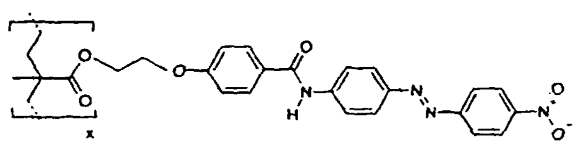

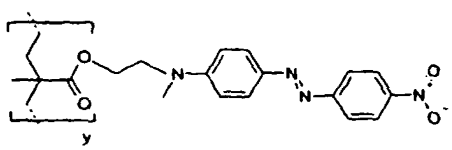

Beispiel 1 (x:y=50:50)

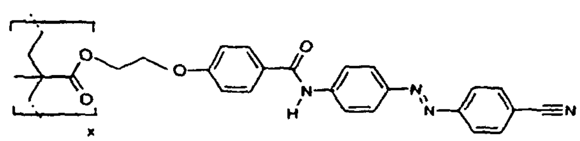

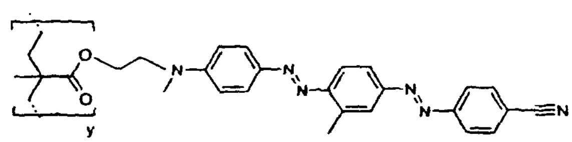

Beispiel J (x:y=50:50)

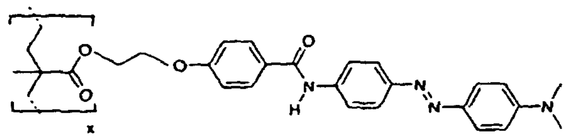

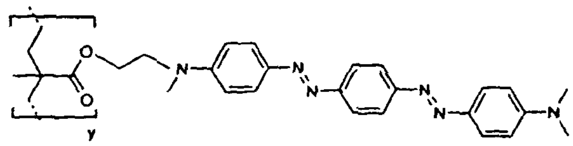

Beispiel K

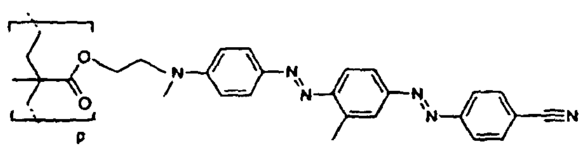

Beispiel L

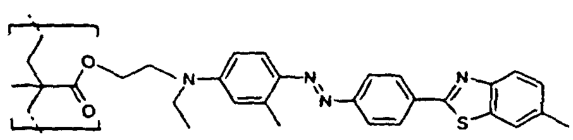

aus BHE4553

Beispiel M

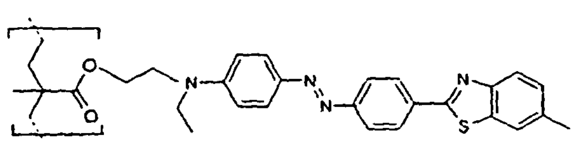

aus BHE4546

Beispiel N (x:y=50:50)

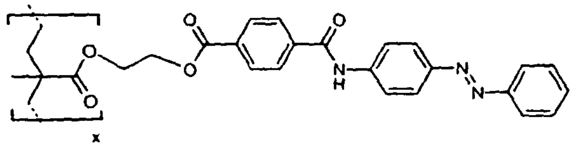

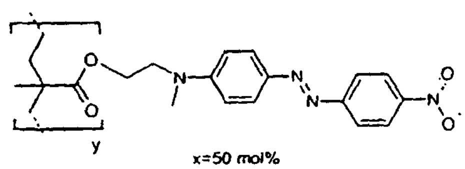

x=50 mol%

Beispiel O (x:y=50:50)

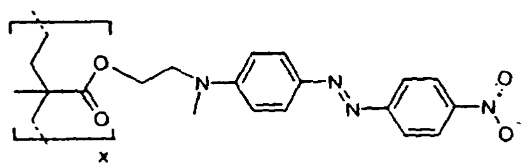

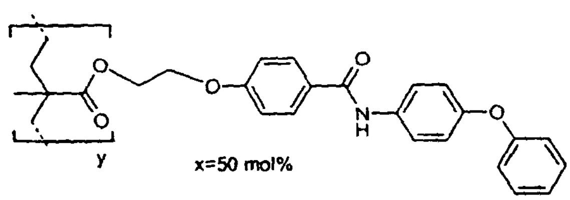

x=50 mol%

Beispiel P (x:y=50:50)

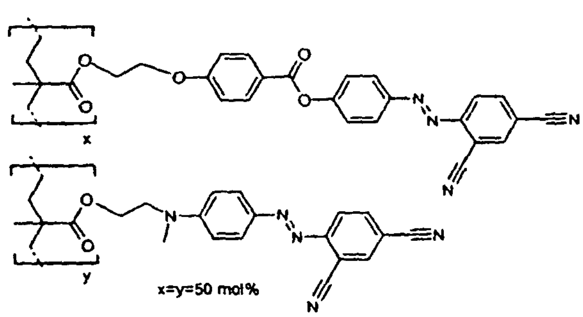

x=y=50 mol%

Beispiel Q

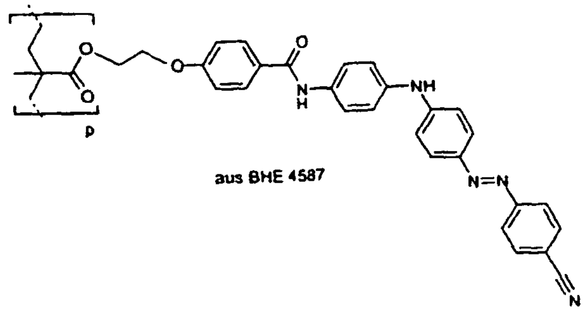

aus BHE 4587

Beispiel R

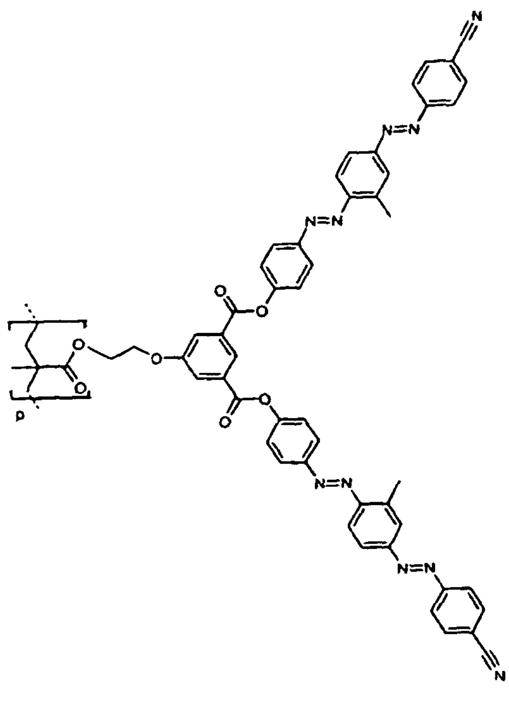

Beispiel S

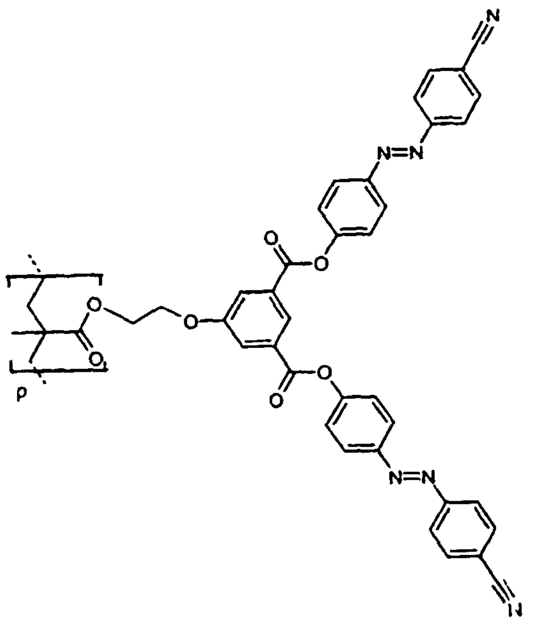

Beispiel T

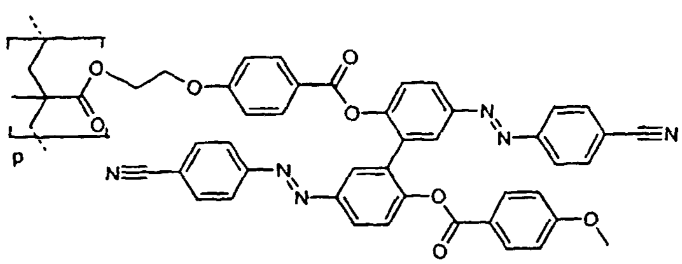

Beispiel U

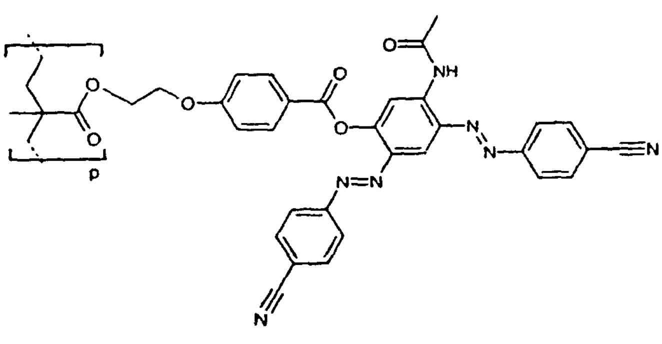

Beispiel V

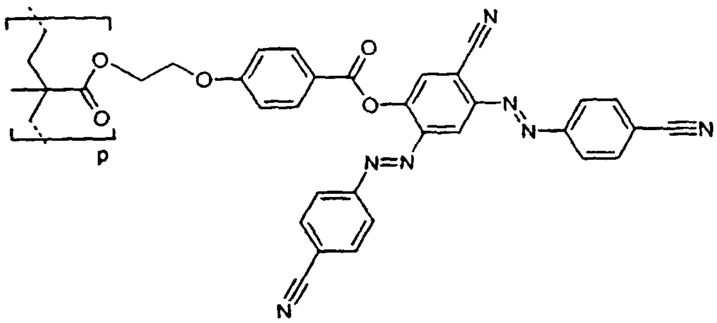

Beispiel W (x:y=50:50)

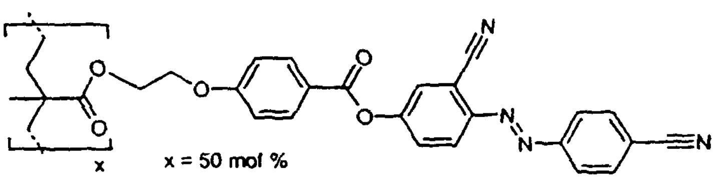

x = 50 mol %

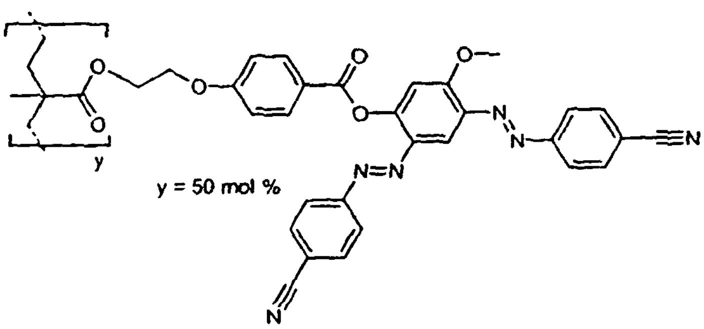

y = 50 mol %

Beispiel X (x:y=50:50)

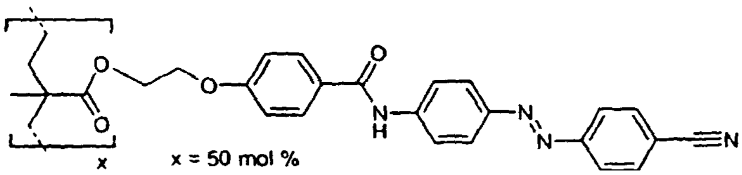

x = 50 mol %

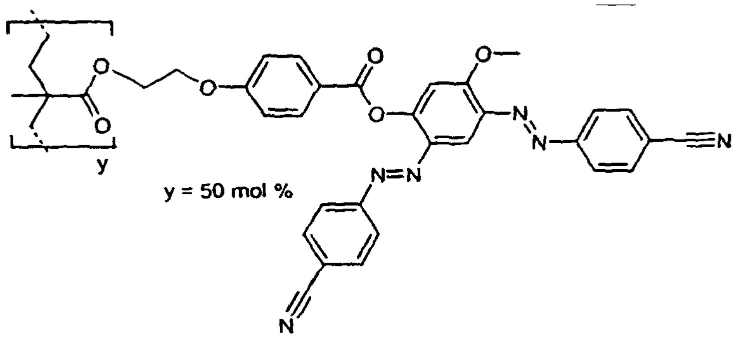

y = 50 mol %

Beispiel Y

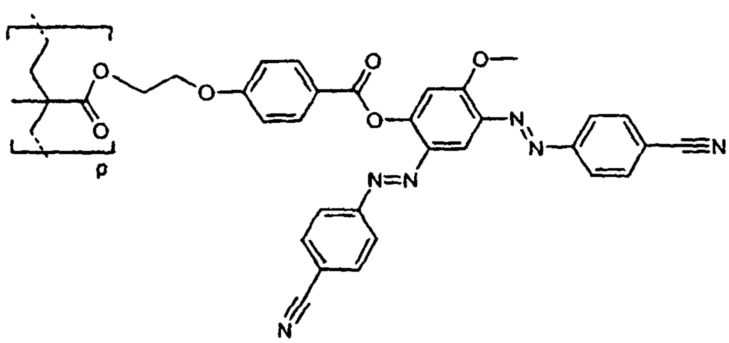

Beispiel Z

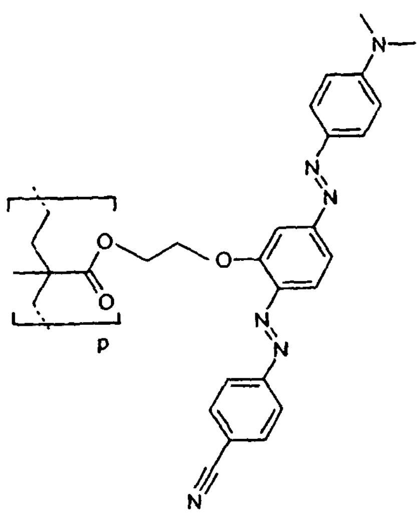

Spezielle Monomersynthese von

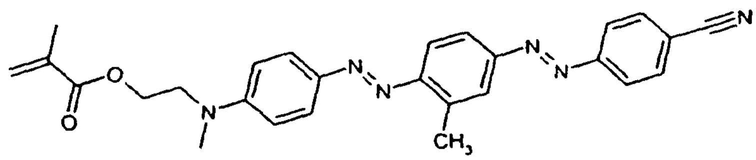

***N-Methyl-N-(2-Methacryloyloxy-ethyl)-anilin***

Variante aus Methacrylchlorid:

100 g N-Methyl-N-(2-hydroxyethyl)-anilin werden in 100 ml Chloroform gelöst. Man gibt bei 40°C unter Rühren tropfenweise 182,6 g Triethylamin und 137,2 g Methacrylchlorid langsam hinzu und rührt bei 40°C über Nacht. Danach versetzt man die Reaktionslösung mit 500 ml Chloroform und schüttelt 5 mal mit je 200 ml Wasser aus. Die organische Phase wird über wasserfreiem Magnesiumsulfat getrocknet, mit Kupfer(I)chlorid versetzt und nach Abdestillieren des Lösungsmittels im Hochvakuum destilliert. Der Methacrylester des Hydroxyethylanilins geht bei 127-130°C/55 mbar als wasserklare Flüssigkeit über. Die Ausbeute beträgt 49,5 g.

Variante aus Methacrylsäure:

In eine Lösung aus 100 ml N-Methyl-N-(2-hydroxyethyl)-anilin, 265 ml Methacrylsäure und 26,5 g Hydrochinon in 398 ml Chloroform werden bei Raumtemperatur unter Rühren 50 ml konz. Schwefelsäure getropft. Nach dem Stehen über Nacht wird aufgeheizt und das Reaktionswasser azeotrop entfernt. Nach dem Abkühlen wird mit konzentrierter wässriger Soda-Lösung ein pH von 7 bis 8 eingestellt, und das Produkt wird aus dieser Lösung durch Ausschütteln mit Ether extrahiert. Man verfährt wie oben angegeben weiter und erhält eine Ausbeute von 56 g.

***4-Amino-3-Methyl-4'-cyanoazobenzen*** wird auf folgende Weise hergestellt:

37,5 g 4-Cyanoanilin werden bei 60°C in 200 ml Wasser gelöst. In diese Lösung gibt man 20 ml 37% Salzsäure und rührt bis zur vollständigen Lösung. Diese Lösung wird auf 0°C abgekühlt und die restlichen 230 ml 37% Salzsäure langsam zugegeben. Unter Einhaltung einer Temperatur von 0 - 5°C tropft man 104,5 g Nitrosylschwefelsäure 40% innerhalb von 45 Min. zu. Es werden 2 h bei 0- 5°C nachgerührt.

In einen 10 1 Vierhalskolben werden 89 ml Natriumhydrogensulfitlösung 37% und 35 ml Formaldehydlösung 37% bei 60°C vorgelegt. Bei dieser Temperatur gibt man 34 g o-Toluidin zu und rührt 2 h nach. In diese Lösung werden nun 1000 ml Wasser gegeben und nochmals 30 Min. bei 60°C nachgerührt. Unter Außenkühlung (Eisbad) wird es auf 10 - 15°C abgekühlt.

Die Diazoniumsalzlösung wird in einen Dosiertrichter überführt. Unter Einhaltung einer Temperatur von 10 - 20°C lässt man die Diazoniumsalzlösung in die oben beschriebene Lösung langsam zulaufen. Während der Zugabe der Diazoniumsalzlösung setzt man 250 ml Natronlaugelösung 45% zu um den pH - Wert anzuheben. Mit der Zugabe von 600 ml Natronlaugelösung 20% wird der pH-Wert auf 5 angehoben. Es wird 1 h nachgerührt.

1100 ml Natronlaugelösung 45% werden unter Eisbadkühlung langsam zugegeben, Nun lässt man die Kupplungslösung über Nacht bei Raumtemperatur nachrühren.

Man gibt unter Eisbadkühlung langsam 1720 ml Salzsäure zu, um einen pH - Wert von 10 - 10,3 zu erreichen. Es wird kurz nachgerührt (ca. 30 Min.). Den Niederschlag saugt man ab, wäscht mit Wasser nach und trocknet den Rückstand im Vakuumtrockenschrank bei 50°C Die Ausbeute beträgt: 67,9g ( 89% )

In einem 1 l - Dreihalskolben werden 57,7 g ***4-Amino-3-Methyl-4'-cyanoazobenzen*** in 300 ml Wasser vorgelegt, unter Kühlung150 ml Schwefelsäure 96% langsam zugegeben. Unter Einhaltung einer Temperatur von 0 - 5°C tropft man 99 g Nitrosylschwefelsäure ( 40 wt. % ) innerhalb von 40 Min. zu. Es wird 1 h bei 0 - 5°C nachgerührt.

In einen 4 l - Vierhalskolben werden 53,5 g ***N-Methyl-N-(2-Methacryloyloxy ethyl)-anilin*** in 1500 ml Isopropanol vorgelegt. Die Diazoniumsalzlösung wird in den Dosiertrichter überführt. Unter Einhaltung einer Temperatur von 10°C und einem pH-Wert von 2 - 2,5, welcher durch gleichzeitigen Zugabe von bis ca. 1,7 l 15 % Natronlauge eingehalten wird, gibt man die Diazoniumsalzlösung nun langsam zu. Es wird 1 h nachgerührt. Den Niederschlag saugt man ab, wäscht mit etwas Isopropanol und viel Wasser nach und trocknet den Rückstand im Trockenschrank bei 60°C Die

Ausbeute beträgt: 69 g (61%)' Fp 161°C. $\lambda_{max}$= 503,5 nm (DMF). ε = 35300 l/(mol x cm)

| Elementaranalyse: $C_{27}H_{26}N_6O_2$ (466,55) | | | |
|---|---|---|---|
| Ber. | C69,51; | H5,62; | N18,01; |
| Gef. | C69,00; | H5,80; | N18,00; |

Polymersynthese:

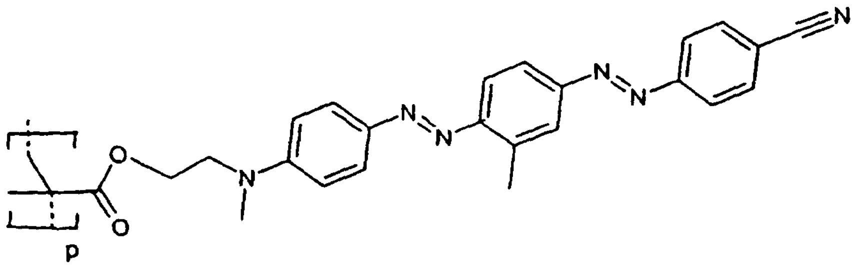

10,0 g von dem im Beispiel 1 beschriebenen Monomer werden in 90 ml N-Methyl-2-pyrrolidon bei 70°C gelöst. Nachdem das Monomer in Lösung gegangen ist, spült man noch eine halbe Stunde mit Argon, gibt danach 0,2 g 2,2'-Azoisobuttersäuredinitril in 2,0 ml NMP zu und lässt diese Lösung 2 Tage unter Argonfluss rühren. In ein 2 l Becherglas mit 700 ml Wasser wird die fertige Lösung zugetropft und eine halbe Stunde nachgerührt. Danach wird die Ausfällung abgesaugt. Das Produkt wird in 100 ml Methanol eine halbe Stunde beim Rückfluss aufgekocht und die Methanollösung abgegossen. Diesen Vorgang wiederholt man noch zweimal. Das fertige Produkt wird im Vakuum getrocknet. Ausbeute: 7,0 g (70% d. Th.)

## Patentansprüche

1. Verfahren zur Speicherung digitaler Informationen, bei dem ein Speichermedium, bestehend aus mindestens einer Substratschicht und mindestens einer Aufzeichnungsschicht durch einen fokussierten Laserstrahl abgetastet wird, der im Pulsbetrieb oder durch Intensitätsmodulation im Continuous-Wave-Betrieb mit unterschiedlichen Pulsenergien und/oder Polarisationszuständen arbeitet, wobei keine Vorbelichtung der Aufzeichnungsschicht erfolgt und Doppelbrechungen durch ein oder mehrere Pulse erzeugt werden, wobei alternativ auf das Abtasten des Lasers verzichtet werden kann, falls auf eine andere Weise für eine Relativbewegung zwischen Medium und Laserspot, gesorgt wird und das Aufzeichnungsmaterial einen chemisch gebundenen Farbstoff enthält, **dadurch** gekennzeichnet daß der Farbstoff der Formel (I) entspricht:

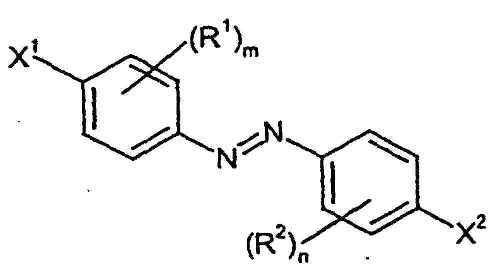

(I),

worin

| | |
|---|---|
| $R^1$ und $R^2$ | unabhängig voneinander für Wasserstoff oder einen nichtionischen Substituenten stehen und |

m und n unabhängig voneinander für eine ganze Zahl von 0 bis 4, vorzugsweise 0 bis 2 stehen, wobei

$X^1$ und $X^2$ die Bedeutung $-X^{1'}-R^3$ bzw. $X^{2'}-R^4$ haben, und

$X^{1'}$ und $X^{2'}$ für eine direkte Bindung, -O-, -S-, $-(N-R^5)-$, $-C(R^6R^7)-$, -(C=O)-, -(CO-O)-, - $(CO-NR^5)-$, $-(SO_2)-$, $-(SO_2-O)-$, $-(SO_2-NR^5)-$, $-(C=NR^8)-$ oder $-(CNR^8-NR^5)$-stehen,

$R^3$, $R^4$, $R^5$ und $R^8$ unabhängig voneinander für Wasserstoff, $C_1$- bis $C_{20}$-Alkyl, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O), $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-$(SO_2)$-, $C_3$- bis $C_{10}$-Cycloalkyl-$(SO_2)$-, $C_2$- bis $C_{20}$-Alkenyl-$(SO_2)$- oder $C_6$- bis $C_{10}$-Aryl-$(SO_2)$- stehen oder

$X^{1'}-R^3$ und $X^{2'}-R^4$ für Wasserstoff, Halogen, Cyan, Nitro, $CF_3$ oder $CCl_3$ stehen können,

$R^6$ und $R^7$ unabhängig voneinander für Wasserstoff, Halogen, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl stehen

und
bei der Herstellung des Aufzeichnungsmaterials mindestens ein Monomer der Formel (II) verwendet worden ist

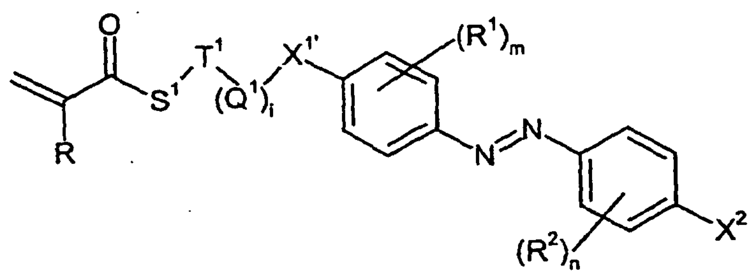

(II),

worin

R für Wasserstoff oder Methyl steht und

$R^1=R^2=H$ und
$X^2=X^{2'}-R^4=CN$ bedeuten.

**2.** Verfahren gemäß Anspruch 1, zum optischen Einschreiben, Überschreiben und Löschen optisch auslesbarer digitaler Informationen in ein flächig ausgedehntes Speichermedium, wobei der optische Einschreibprozess in einem Aufbau oder Abbau von Doppelbrechungen in einer Aufzeichnungsschicht resultiert, ohne dass sich die Aufzeichnungsschicht chemisch zersetzt oder verändert und ohne dass sich die Oberflächentopographien einer der Schichten des Speichermediums maßgeblich verändern.

**3.** Verfahren gemäß einem oder mehrerer vorangegangenen Ansprüche, in welchem das Speichermaterial eine hohe Lichtsensitivität bevorzugt $\geq 0{,}3\ cm^2/J$ im Wellenlängenbereich von 390 nm bis 580 nm aufweist, die Lichtpulse eine Dauer von 0,1 bis 1000 ns und einer Pulsenergie zwischen 0,1 und 1000 $mJ/cm^2$ aufweisen, und zudem die durch einen Lesepuls induzierte Doppelbrechung mindestens 1 % des Wertes betragen muss, der durch monchromatische continuous wave Bestrahlung mit polarisierten Licht im sichtbaren Wellenlängenbereich maximal erreicht werden kann und die Doppelbrechung größer als 0,03 ist.

**4.** Verfahren gemäß einem oder mehrerer der vorangegangenen Ansprüche, wobei die Schreibwellenlänge im Absorptionsbereich der Aufzeichnungsschicht, insbesondere im Bereich hoher Lichtsensitivität gemäß einem oder mehrerer der vorangegangenen Ansprüche liegt, wobei die Lesewellenlänge entweder der Schreibwellenlänge gleicht oder langwelliger ist, wobei die Intensität kleiner als 10 %, bevorzugt kleiner als 5 %, besonders bevorzugt kleiner als 1 % der Intensität des Schreiblasers gewählt wird, sofern die Lesewellenlänge im Bereich der hohen Lichtsensitivität liegt.

**5.** Verfahren gemäß einem oder mehreren der vorangegangenen Ansprüche, wobei Polymere oder Oligomere verwendet werden, an deren Hauptgruppen Seitenketten gebunden sind, die Licht des Schreiblasers absorbieren.

**6.** Verfahren gemäß einem oder mehreren der vorangegangenen Ansprüche, wobei die Aufzeichnungsschicht eine Dicke von 50 bis 500 nm aufweist.

**7.** Speichermedien, hergestellt gemäß einem oder mehrerer der vorangegangenen Ansprüche.

## Claims

**1.** Method of storing digital items of information in which a storage medium, comprising at least one substrate layer and at least one recording layer, is scanned by a focused laser beam that operates in the pulse mode or by intensity modulation in the continuous-wave mode with various pulse energies and/or polarization states, wherein the recording layer is not pre-exposed and birefringences are produced by one or more pulses, wherein, alternatively, the scanning of the laser can be dispensed with if a relative movement between medium and laser spot can be provided in another way, and the recording material contains a chemically bound dyestuff, **characterized in that** the dyestuff corresponds to Formula (I):

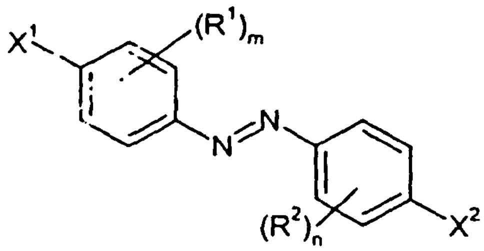

(I),

where

| | |
|---|---|
| $R^1$ and $R^2$ | stand, independently of one another for hydrogen or a nonionic substituent and |
| m and n | stand, independently of one another for an integer from 0 to 4, preferably 0 to 2, and |
| $X^1$ and $X^2$ | denote $-X^{1'}-R^3$ or $X^{2'}-R^4$, and |
| $X^{1'}$ and $X^{2'}$ | stand for a direct bond, -O-, -S-, $-(N-R^5)-$, $-C(R^6R^7)-$, -(C=O)-, -(CO-O)-, $-(CO-NR^5)-$, $-(SO_2)-$, $-(SO_2-O)-$, $-(SO_2-NR^5)-$, $-(C=NR^8)-$ or $-(CNR^8-NR^5)-$, |
| $R^3$, $R^4$, $R^5$ and $R^8$ | stand, independently of one another for hydrogen, $C_1$- to $C_{20}$-alkyl, $C_3$- to $C_{10}$-cycloalkyl, $C_2$- to $C_{20}$-alkenyl, $C_6$- to $C_{10}$-aryl, $C_1$- to $C_{20}$-alkyl-(C=O), $C_3$- to $C_{10}$-cycloalkyl-(C=O)-, $C_2$- to $C_{20}$-alkenyl- (C=O) -, $C_6$- to $C_{10}$-aryl-(C=O)-, $C_1$- to $C_{20}$-alkyl- $(SO_2)$-, $C_3$- to $C_{10}$-cycloalkyl-$(SO_2)$-, $C_2$- to $C_{20}$-alkenyl-$(SO_2)$- or $C_6$- to $C_{10}$-aryl-$(SO_2)$-, or |
| $X^{1'}-R^3$ and $X^{2'}-R^4$ | may stand for hydrogen, halogen, cyano, nitro, $CF_3$ or $CCl_3$, |
| $R^6$ and $R^7$ | stand, independently of one another for hydrogen, halogen, $C_1$- to $C_{20}$-alkyl, $C_1$- to $C_{20}$-alkoxy, $C_3$- to $C_{10}$-cycloalkyl, $C_2$- to $C_{20}$-alkenyl or $C_6$- to $C_{10}$-aryl. |

and
during the preparation of the recording material, at least one monomer of the Formula (II) has been used

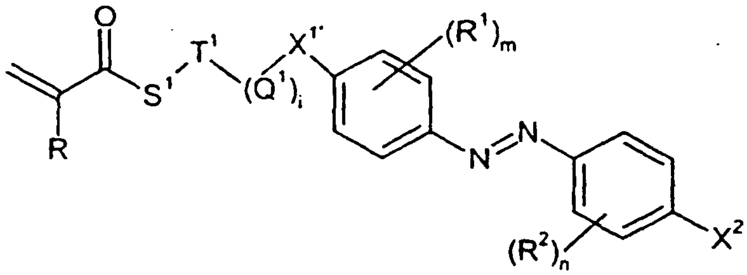

(II),

where

R stands for hydrogen or methyl and

$R^1=R^2=H$ and
$X^2=X^{2'}-R^4=CN$.

**2.** Method according to Claim 1, of optically writing, overwriting and erasing items of digital information that can be read out optically in a two-dimensional storage medium, wherein the optical writing process results in a buildup or elimination of birefringences in a recording layer without the recording layer being chemically decomposed or altered and without the surface topography of one of the layers of the storage medium being substantially altered.

**3.** Method according to one or more of the preceding claims in which the storage material has a high photosensitivity, preferably ≥ 0.3 $cm^2/J$, in the wavelength range from 390 nm to 580 nm, the light pulses have a duration of 0.1 to 1000 ns and a pulse energy of between 0.1 and 1000 $mJ/cm^2$, and, in addition, the birefringence induced by a reading pulse must be at least 1% of the value that can be achieved as a maximum by monochromatic continuous-wave irradiation with polarized light in the visible wavelength range and the birefringence is greater than 0.03.

**4.** Method according to one or more of the preceding claims, wherein the writing wavelength is in the absorption range of the recording layer, in particular in the range of high photosensitivity according to one or more of the preceding claims, wherein the reading wavelength is either equal to the writing wavelength or is of longer wavelength, and wherein the chosen intensity is less than 10%, preferably less than 5%, particularly preferably less than 1% of the intensity of the writing laser provided the reading wavelength is in the high-photosensitivity range.

**5.** Method according to one or more of the preceding claims, wherein polymers or oligomers are used to whose main groups side chains are bound that absorb light of the writing laser.

**6.** Method according to one or more of the preceding claims, wherein the recording layer has a thickness of 50 to 500 nm.

**7.** Storage media, prepared according to one or more of the preceding claims.

## Revendications

**1.** Procédé d'enregistrement d'informations numériques pour lequel un support d'enregistrement, consistant en au moins une couche de substrat et au moins une couche d'enregistrement, est exploré par un faisceau laser focalisé, qui travaille en fonctionnement pulsé ou en fonctionnement « continuous wave » par modulation d'intensité avec différentes énergies d'impulsion et/ou différents états de polarisation, procédé pour lequel il ne se produit pas de pré-exposition de la couche d'enregistrement et pour lequel des biréfringences sont produites par une ou plusieurs impulsions, sachant qu'en variante, on peut renoncer à l'exploration par le laser si on assure d'une autre façon un mouvement relatif entre le support et le spot du laser, et pour lequel le matériau d'enregistrement contient un colorant lié chimiquement, **caractérisé en ce que** le colorant correspond à la formule (I) :

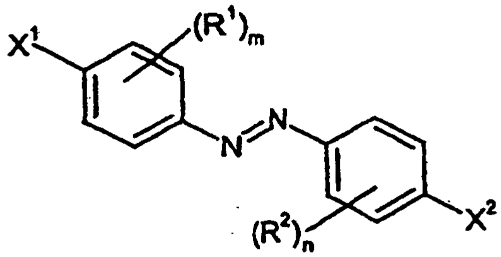

(I),

dans laquelle

| | |
|---|---|
| $R^1$ et $R^2$ | représentent indépendamment l'un de l'autre un hydrogène ou un substituant non ionique et |
| m et n | représentent indépendamment l'un de l'autre un nombre entier de 0 à 4, de préférence de 0 à 2, sachant que |
| $X^1$ et $X^2$ | signifient $X^{1'}$-$R^3$, resp $X^{2'}$-$R^4$, et |
| $X^{1'}$ et $X^{2'}$ | représentent une liaison directe, -O-, -S-, -(N-$R^5$)-, -C($R^6R^7$)-, -(C=O)-, -(CO-O-)-, -(CO-N$R^5$)-, -($SO_2$)-, -($SO_2$-O)-, -($SO_2$-N$R^5$)-, -(C=N$R^8$)- ou -(CN$R^8$-N$R^5$)-, |
| $R^3$, $R^4$, $R^5$ et $R^8$ | représentent indépendamment les uns des autres un hydrogène, un alkyle en $C_1$ à $C_{20}$, un cycloalkyle en $C_3$ à $C_{10}$, un alcényle en $C_2$ à $C_{20}$, un aryle en $C_6$ à $C_{10}$, un alkyle-(C=O) en $C_2$ à $C_{20}$, un cycloalkyle-(C=O) en $C_3$ à $C_{10}$, un alcényle-(C=O) en $C_2$ à $C_{20}$, un aryle-(C=O) en $C_6$ à $C_{10}$, un alkyle-($SO_2$) en $C_1$ à $C_{20}$, un cycloalkyle-($SO_2$) en $C_3$ à $C_{10}$, un alcényle-($SO_2$) en $C_2$ à $C_{20}$ ou un aryle-($SO_2$) en $C_6$ à $C_{10}$ ou |
| $X^{1'}$-$R^3$, et $X^{2'}$-$R^4$ | peuvent représenter un hydrogène, un halogène, un cyanure, un nitryle, un $CF_3$ ou un $CCl_3$ |
| $R^6$ et $R^7$ | représentent indépendamment l'un de l'autre un hydrogène, un halogène, un alkyle en $C_1$ à $C_{20}$, un alcoxyle en $C_1$ à $C_{20}$, un cycloalkyle en $C_3$ à $C_{10}$, un alcényle en $C_2$ à $C_{20}$ ou un aryle en $C_6$ à $C_{10}$. |

et

pour lequel, pour la préparation du matériau d'enregistrement, au moins un monomère de la formule (II) a été utilisé

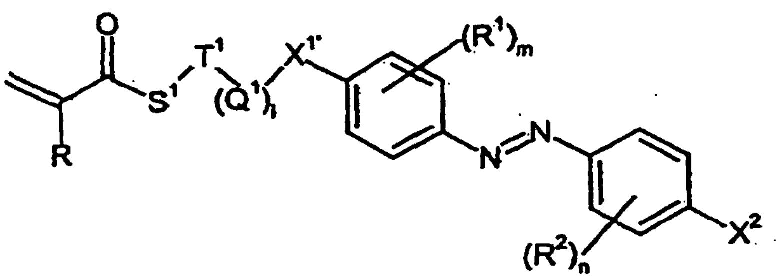

(II),

dans laquelle

R représente un hydrogène ou un méthyle et

$R^1 = R^2 = H$ et
$X^2 = X^{2'}\text{-}R^4 = CN$.

2. Procédé selon la revendication 1 pour l'écriture, la réécriture et l'effacement optiques d'informations numériques lisibles optiquement dans un support d'enregistrement à extension bidimensionnelle, sachant que le processus d'écriture optique résulte en un établissement et en une annulation de biréfringences dans une couche d'enregistrement, sans que la couche d'enregistrement ne se décompose ni ne se modifie chimiquement et sans que les topographies de surface d'une des couches du support d'enregistrement ne se modifient notablement.

3. Procédé selon une ou plusieurs des revendications précédentes, pour lequel le matériau d'enregistrement présente une haute sensibilité à la lumière, de préférence $\geq$0,3 $cm^2/J$, dans l'intervalle de longueur d'ondes de 390 nm à 580 nm, pour lequel les impulsions de lumière ont une durée de 0,1 à 1000 ns et une énergie d'impulsion comprise entre 0,1 et 1000 $mJ/cm^2$, et pour lequel de plus la biréfringence induite par une impulsion laser doit être d'au moins 1 % de la valeur qui peut être atteinte au maximum par une exposition monochromatique en « continuous wave » avec de la lumière polarisée dans la plage de longueur d'ondes visible, et la biréfringence est supérieure à 0,03.

**4.** Procédé selon une ou plusieurs des revendications précédentes, pour lequel la longueur d'onde d'écriture, selon une ou plusieurs des revendications précédentes, se trouve dans la plage d'absorption de la couche d'enregistrement, en particulier dans la plage de haute sensibilité à la lumière, sachant que la longueur d'onde de lecture est soit égale, soit plus longue que la longueur d'onde d'écriture, sachant que, dans la mesure où la longueur d'onde de lecture se trouve dans la plage des hautes sensibilités à la lumière, l'intensité est choisie plus petite que 10 %, de préférence plus petite que 5 %, de façon particulièrement préférée plus petite que 1 % de l'intensité du laser d'écriture.

**5.** Procédé selon une ou plusieurs des revendications précédentes, pour lequel on utilise des polymères ou des oligomères aux groupes principaux desquels sont liées des chaînes latérales qui absorbent la lumière du laser d'écriture.

**6.** Procédé selon une ou plusieurs des revendications précédentes, pour lequel la couche d'enregistrement a une épaisseur de 50 à 500 nm.

**7.** Supports d'enregistrement, fabriqués selon une ou plusieurs des revendications précédentes.